Europäisches Patentamt

European Patent Office

Office européen des brevets

(11) Veröffentlichungsnummer: **0 210 946 B1**

(19)

(12) EUROPÄISCHE PATENTSCHRIFT

(45) Veröffentlichungstag der Patentschrift: **14.10.92**

(51) Int. Cl.⁵: **B21B 37/00**, B21B 39/12

(21) Anmeldenummer: **86730088.1**

(22) Anmeldetag: **22.05.86**

(54) **Rollgang für Flachmaterial-Walzanlage.**

(30) Priorität: **24.07.85 DE 3526916**

(43) Veröffentlichungstag der Anmeldung:
**04.02.87 Patentblatt 87/06**

(45) Bekanntmachung des Hinweises auf die
Patenterteilung:
**14.10.92 Patentblatt 92/42**

(84) Benannte Vertragsstaaten:
**BE FR GB IT SE**

(56) Entgegenhaltungen:
**DE-A- 2 855 081      DE-A- 3 331 000**
**DE-C- 961 367        GB-A- 868 643**
**GB-A- 1 496 138      US-A- 3 209 245**
**US-A- 3 397 364**

(73) Patentinhaber: **MANNESMANN Aktiengesellschaft**
**Mannesmannufer 2**
**W-4000 Düsseldorf 1(DE)**

(72) Erfinder: **Schoen, Martin, Dipl.-Ing.**
**Scheperstrasse 6**
**W-4224 Hünxe(DE)**
Erfinder: **Wüllenweber, Horst**
**Mühlenstrasse 124**
**W-4200 Oberhausen(DE)**
Erfinder: **Specht, Herbert, Dr.rer.nat.**
**Sauerbruchstrasse 13**
**W-6204 Taunusstein(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

**Beschreibung**

Die Erfindung betrifft eine Vorrichtung zum Erfassen von Anfang und Ende von warmem Walzgut gemäß dem Gattungsbegriff des Hauptanspruches.

Eine gattungsmäßige Vorrichtung ist aus der GB-A-1496138 bekannt. Danach wird ein Sensor außerhalb der Rollbahn in einer Flachmaterial-Walzanlage zur Erfassung von Walzgutanfang und -ende angeordnet. In der konkreten Ausführungsform wird ein Radiowellensender unter einem Winkel auf die Rollbahn ausgerichtet und die reflektierten Wellen werden von einer ebenfalls auf die Rollbahn ausgerichteten Antenne empfangen und die Signale mittels einer nachgeschalteten Elektronik ausgewertet. Nachteilig bei dieser Anordnung ist, daß der Rollgangsrahmen eine für die Reflektion der Radiowellen geeignete Gitterstruktur aufweisen und dieser hinsichtlich seiner Reflektionseigenschaften ständig sauber gehalten werden muß. Bekannt ist außerdem, daß Radiowellen leicht gestört werden können und dies zu Fehlanzeigen führen kann. Von weiterem Nachteil ist die Anordnung eines Abschirmbleches unmittelbar neben der Rollbahn, das der ungehinderten Bewegung von Kranen und anderen Transportmitteln im Wege steht.

Eine nicht gattungsmäßige Vorrichtung zur Detektierung von bewegtem stab- oder drahtförmigem Gut ist in der DE-A-2855081 offenbart. Bei dieser Vorrichtung wird das Gut im Inneren eines Führungsrohres und einer Spule bewegt, wobei die Spule Teil eines elektrischen Schwingkreises ist, dessen Frequenzverstimmung zur Detektierung des Gutes benutzt wird. Beim Transport von warmem Walzgut muß die Spule mittels Umlaufwasser gekühlt werden. Weiterhin ist eine genaue Führung des Walzgutes erforderlich, damit im Falle von krummen Enden die Spule mechanisch nicht beschädigt wird.

Aufgabe der Erfindung ist es, eine gattungsmäßige Vorrichtung anzugeben, die zum sicheren Erfassen von Walzgut in einem Warmwalzwerk geeignet und im hohen Maße wartungsfrei und im, gesamten Anlagenbereich verwendbar ist. Die Vorrichtung soll darüber hinaus auch unter schwierigen Walzbedingungen zuverlässig anzeigen und schließlich Von dem Walzgut geschützt einbaubar und bei Wartung und Änderung des Rollganges auch leicht ausbaubar sein.

Diese Aufgabe wird von einer gattungsgemäßen Vorrichtung ausgehend mit den im kennzeichnenden Teil des Hauptanspruches angegebenen Merkmalen gelöst.

Anspruch 2 betrifft eine Weiterbildung der Walzguterfassungsvorrichtung gemäß Anspruch 1.

Die verwendeten Schleifen sind schon von ihren Abmessungen und dem zur Anwendung kommenden System her den Verhältnissen in einem Blechwalzwerk angemessen. Für die Schleife wird beispielsweise warmgewalzter Rundstahl von 20 mm Durchmesser verwendet. Staub und Wasser im Rollgang beeinträchtigen die Funktion der Schleifen überhaupt nicht. Die Verbindung mit Detektoren erfolgt über eine Distanz bis zu 100 m mit einfachem verdrillten Fernmeldekabel. Die Sensoren sind sowohl im Bereich des warmen wie auch des kalten Bleches einsetzbar. Blechanfang und -ende werden vom System auch dann erkannt, wenn die Blechenden um mehrere Dezimeter hochgebogen sind. In dieser Hinsicht ist die Verwendung induktiver Sensoren auf anderen Gebieten keine vergleichbare Anwendung, da im anderen Fall der Abstand zwischen Gut und Sensor konstant und meistens klein ist. Im Rollgang können die Schleifen deswegen auch mehrere Zentimeter unter der Rollebene angeordnet sein und ggf. in die Rahmenversteifung oder die zwischen den Rollen vorgesehenen Walzgutabweisern eingelassen sein.

Auch wenn die Schleifen sehr langgestreckte Formen haben dürfen, ohne daß sie an Wirksamkeit verlieren, können auch mehrere Schleifen, deren Form sich mehr dem Quadrat annähert, zur Anwendung kommen. Die Sensoren können im gesamten Bereich eines Walzwerks angewendet werden, da sie in jedem Temperaturbereich ansprechen.

Die Erfindung wird an einem schematisch dargestellten vorteilhaften Ausführungsbeispiel näher erläutert.

Es zeigen:

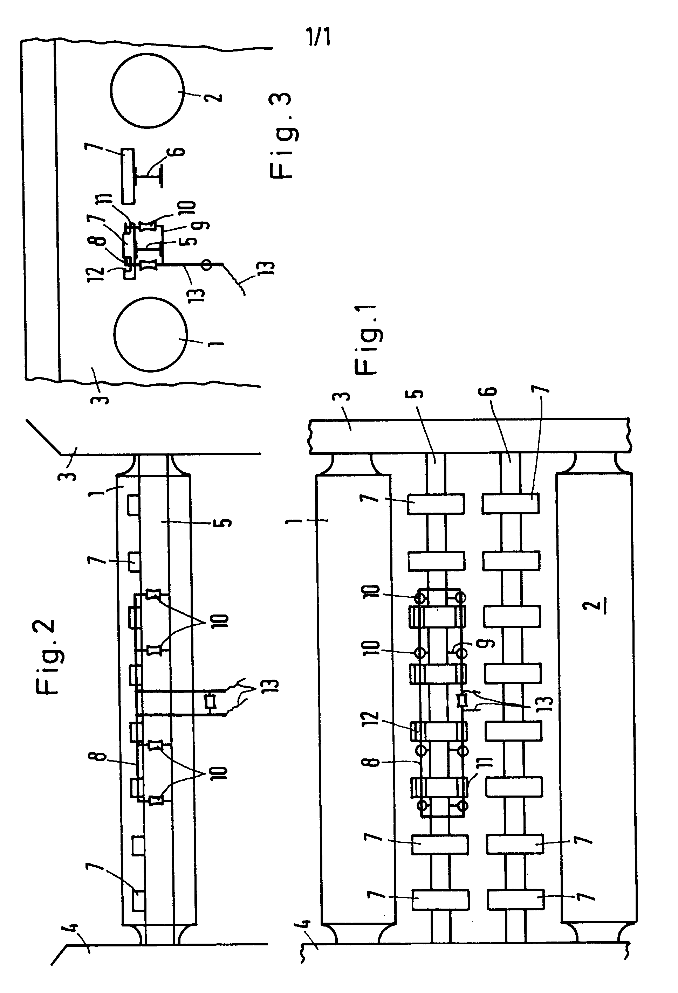

Figur 1    eine Draufsicht

Figur 2    den Querschnitt und

Figur 3    den Längsschnitt von einem Rollgangsabschnitt einer Blechwalzanlage.

Mit 1 und 2 sind zwei aufeinanderfolgende Rollen im Rahmen 3,4 bezeichnet. Zwischen den Rollen 1,2 sind zwei Doppel-T-Träger 5,6 zur Rahmenaussteifung vorgesehen, die mit Walzgutabweisern 7 vielfach besetzt sind. Auf dem Träger 5 ist eine Schleife 8 angeordnet. Hierfür sind Unterzüge 9 mit Isolatoren 10 vorgesehen. Die Schleife 8 ist durch Ausklinkungen 11,12 in den Walzgutabweisern 7 hindurchgeführt. Außerdem sind Zuleitungen 13'zur Schleife 8 vorhanden, die die Verbindung mit den im Schalthaus aufgestellten Detektoren herstellen. Die Detektoren sind übliche Einheiten.

**Patentansprüche**

1.  Vorrichtung zum Erfassen von Anfang und Ende von warmem Walzgut in einem Rollgang für den Walzwerks- und Adjustagebereich einer Flachmaterial-Walzanlage, bestehend aus in einem Rollgangsrahmen angeordneten Rollgangsrollen, zwischen diesen angeordneten, den Rahmen versteifenden Trägerelementen und in einem außerhalb der Rollebene angeordneten Sensor zur Erfassung von Walzgutanfang und -ende,
dadurch gekennzeichnet,
daß als Sensor zwischen zwei benachbarten Rollen (1, 2) auf Traversen (5, 6), die mit linealartigen Walzgutabweisern (7) versehen sind, galvanisch isoliert eine aus einem metallischen Stabmaterial bestehende Induktionsschleife vorgesehen ist, die Teil eines elektrischen Schwingkreises ist und deren Frequenzverstimmung als Erfassung des Walzgutanfanges oder -endes benutzt wird, wobei die Induktionsschleife eine oder mehrere offene Schleifen (8) aufweist, die in einer Ebene parallel zur Rollebene und unter dieser angeordnet ist (sind).

2. Vorrichtung nach Anspruch 1,
dadurch gekennzeichnet,
daß die metallischen Schleifen (8) eine größere Längserstreckung quer zur Laufrichtung als in Laufrichtung des Rollganges haben und die sich quer zur Laufrichtung erstreckenden Schenkel der metallischen Schleife (8) in Durchbrüchen oder Ausnehmungen (11, 12) in den Walzgutaberweisern (7) verlaufen.

## Claims

1. A device for detecting the beginning and end of hot rolled stock in a roller table for the rolling mill and finishing region of a flat-material rolling installation, consisting of roller table rollers located in a roller table frame, support elements which strengthen said frame located between said rollers and in a sensor located outside the rolling plane for detecting the beginning and end of the rolled stock,
characterised in that
an induction loop consisting of a metallic rod material is provided, galvanically insulated, as a sensor between two adjacent rollers (1, 2) on crossbars (5, 6) which are provided with bar-type rolled stock guides (7), which loop forms part of an electric oscillating circuit and the frequency increment of which is used as a means for detecting the beginning or end of the rolled stock, the induction loop having one or more open loops (8) which is (are) located in a plane parallel to the rolling plane and beneath said plane.

2. A device according to Claim 1, characterised in that the metallic loops (8) have a greater longitudinal extent transversely to the direction of travel than in the direction of travel of the roller table and the arms of the metallic loop (8) which extend transversely to the direction of travel run in breaches or recesses (11, 12) in the rolled stock guides (7).

## Revendications

1. Dispositif pour détecter le début et la fin d'une matière laminée chaude dans un train de rouleaux pour la zone de laminage et de finissage d'une installation de laminage de produits plats, comportant des rouleaux du train de rouleaux agencés dans un châssis du train de rouleaux, des éléments de support renforçant le châssis, agencés entre ceux-ci, et un capteur, agencé à l'extérieur du plan des rouleaux, pour détecter le début et la fin de la matière laminée,
caractérisé en ce que, en tant que capteur, est prévue, entre deux rouleaux voisins (1,2) sur des traverses (5,6) qui sont munies de butoirs ou supports (7) pour la matière laminée, du type règle, une boucle inductrice, isolée galvaniquement et constituée d'un matériau métallique en forme de barre, boucle qui fait partie d'un circuit oscillant et dont le désaccord de fréquences est utilisé pour détecter le début et la fin de la matière laminée, la boucle inductrice présentant une ou plusieurs boucles ouvertes (8), qui sont agencées dans un plan parallèle au plan des rouleaux et au-dessous de celui-ci.

2. Dispositif selon la revendication 1,
caractérisé en ce que les boucles métalliques (8) ont une plus grande étendue longitudinale transversalement à la direction de roulement que dans la direction de roulement du train de rouleaux, et les branches, s'étendant transversalement à la direction de roulement, de la boucle métallique (8) s'étendent dans des encoches ou évidements (12) dans les butoirs (7) pour la matière laminée.

Fig.3

Fig.1

Fig.2